(19) Europäisches Patentamt / European Patent Office / Office européen des brevets

(11) **EP 2 213 010 B1**

(12) **FASCICULE DE BREVET EUROPEEN**

(45) Date de publication et mention de la délivrance du brevet:
**25.01.2012 Bulletin 2012/04**

(21) Numéro de dépôt: **08854357.4**

(22) Date de dépôt: **07.11.2008**

(51) Int Cl.:
*H04B 1/715* (2011.01)    *H04W 16/14* (2009.01)

(86) Numéro de dépôt international:
**PCT/FR2008/052016**

(87) Numéro de publication internationale:
**WO 2009/068799 (04.06.2009 Gazette 2009/23)**

(54) **CREATION D'UN CANAL PILOTE DANS UN SYSTEME DE RADIOCOMMUNICATION OPPORTUNISTE**

ERSTELLUNG EINES PILOTKANALS IN EINEM OPPORTUNISTISCHEN FUNKKOMMUNIKATIONSSYSTEMS

CREATION OF A PILOT CHANNEL IN AN OPPORTUNISTIC RADIO COMMUNICATION SYSTEM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.11.2007 FR 0759282**

(43) Date de publication de la demande:
**04.08.2010 Bulletin 2010/31**

(73) Titulaire: **FRANCE TELECOM**
**75015 Paris (FR)**

(72) Inventeur: **KOUNTOURIS, Apostolos**
**F-38000 Grenoble (FR)**

(56) Documents cités:
- **RASHAD I ET AL: "Efficient pilot pattern for OFDM-based cognitive radio channel estimation. Part 1" 14TH IEEE ANNUAL SYMPOSIUM ON COMMUNICATIONS & VEHICULAR TECHNOLOGY (SCVT) 15 NOV. 2007 DELFT, NETHERLANDS, 15 novembre 2007 (2007-11-15), pages 164-168, XP002483974 14th IEEE Annual Symposium on Communications & Vehicular Technology (SCVT) IEEE Piscataway, NJ, USA ISBN: 978-1-4244-1369-0**
- **PEREZ-ROMERO J ET AL: "A novel on-demand cognitive pilot channel enabling dynamic spectrum allocation" 2007 2ND IEEE INTERNATIONAL SYMPOSIUM ON NEW FRONTIERS IN DYNAMIC SPECTRUM ACCESS NETWORKS 17-20 APRIL 2007 DUBLIN, IRELAND, 17 avril 2007 (2007-04-17), - 20 avril 2007 (2007-04-20) pages 46-54, XP002483697 2007 2nd IEEE International Symposium on New Frontiers in Dynamic Spectrum Access Networks IEEE Piscataway, NJ, USA ISBN: 1-4244-0662-5**
- **MARTIGNE P ET AL: "An alternative concept to scanning process for cognitive radio systems: technical and regulatory issues" 16TH IST MOBILE AND WIRELESS COMMUNICATIONS SUMMIT, 2007 1-5 JULY 2007 BUDAPEST, HUNGARY, 1 juillet 2007 (2007-07-01), - 5 juillet 2007 (2007-07-05) pages 1018-1022, XP002483696 16th IST Mobile and Wireless Communications Summit, 2007 IEEE Piscataway, NJ, USA ISBN: 1-4244-1662-0**

**Description**

La présente invention se situe dans le domaine de la radio et plus particulièrement de la radio opportuniste. Plus précisément, l'invention concerne un procédé de création d'un canal pilote dans un système de radiocommunication opportuniste (ORCS pour *Opportunistic Radio Communication System* en anglais).

Dans un système de radiocommunication opportuniste, comme par exemple un système de radiocommunication cellulaire opportuniste, on identifie deux types d'équipements : des équipements d'accès au réseau de radiocommunication et des terminaux. Un équipement d'accès au réseau peut desservir plusieurs terminaux dans sa zone de couverture.

Ces équipements, équipements d'accès au réseau et terminaux, utilisent un protocole de radiocommunication opportuniste.

Dans un système de radiocommunication cellulaire opportuniste, le rôle du protocole de radiocommunication opportuniste est de définir les différents types de canaux de communication entre un équipement d'accès au réseau et les terminaux qu'il dessert. Le protocole de radiocommunication opportuniste définit aussi les procédures d'établissement et de maintien de ces canaux de communication.

Deux types de canaux de communication sont définis : le canal pilote et le canal trafic.

Le canal pilote est un canal de communication qui supporte la signalisation et les échanges concernant le contrôle de la communication du système de radiocommunication opportuniste. Le canal pilote est créé par l'équipement d'accès. Un terminal se connecte à un équipement d'accès par l'intermédiaire d'un canal pilote dans le but de mettre en place un canal trafic qui va supporter la communication. Chaque fois que le canal trafic est perdu ou que sa qualité ne satisfait plus ses spécifications techniques de base alors le terminal renégocie avec l'équipement d'accès, via le canal pilote, les paramètres du canal trafic.

La technique actuelle comporte deux approches pour la définition d'un canal pilote dans un système de radiocommunication opportuniste.

Selon une première approche, le canal pilote correspond à un canal physique dédié. Une ou plusieurs bandes de fréquence sont réservées pour supporter le canal pilote. Il n'est pas nécessaire que ces bandes de fréquence appartiennent à l'ensemble des bandes de fréquence utilisées pour la communication.

Un des inconvénients de cette approche est qu'elle nécessite une détermination statique des bandes de fréquence.

Si les bandes de fréquence dédiées pour le canal pilote appartiennent à l'ensemble des bandes de fréquence utilisées pour la communication, alors cet ensemble doit être suffisamment dimensionné pour que ces bandes de fréquence puissent satisfaire à la fois les besoins en canaux de trafic et les besoins en canaux pilote.

Le dimensionnement s'effectue alors sur le nombre maximal de canaux de trafic requis au risque de constater la plupart du temps une sous utilisation de ces bandes de fréquence et d'entrainer une consommation excessive en bandes de fréquence.

Si les bandes de fréquence dédiées pour le canal pilote n'appartiennent pas à l'ensemble des bandes de fréquence utilisées pour la communication, il est alors nécessaire de mettre en place des dispositifs pour que ces bandes de fréquence puissent supporter une communication, comme par exemple des dispositifs d'émission/réception.

Un autre inconvénient est que cette approche implique une planification a priori des fréquences avec l'identification de bandes de fréquence dédiées pour supporter le canal pilote.

Selon une seconde approche, le canal pilote correspond à un canal physique de type ultra large bande (UWB pour *Ultra Wideband* en anglais). Dans ce cas, un canal UWB est superposé au spectre de fréquences utilisé pour la communication.

Cette approche présente l'inconvénient de nécessiter la mise en place de dispositifs, notamment des dispositifs d'émission/réception, et de procédures pour que ces bandes de fréquence puissent supporter une communication.

Le document intitulé « A novel on-demand cognitive pilot channel enabling dynamic spectrum allocation », par Perez-Romero et al., publié dans les proceedings de la conférence « 2007 2nd IEEE International Symposium on New Frontiers in Dynamic Spectrum Access Networks », qui s'est tenue à Dublin en avril 2007, concerne l'implémentation d'un canal pilote cognitif (« Cognitif Pilot Channel », CPC) dans un réseau radio. Le CPC est un canal de contrôle commun, destiné à transporter des informations relatives aux opérateurs, aux fréquences allouées dans une zone géographique donnée, etc. Il s'établit sur une bande de fréquences fixe et connue a priori, telle qu'une fréquence universelle. Par conséquent, les terminaux n'ont pas besoin d'être informés de la fréquence utilisée.

Le document intitulé « Efficient Pilot Pattern for OFDM-based Cognitive Radio Channel Estimation - Part 1 », par Rashad et al., publié dans les proceedings de la conférence « 14th IEEE Annual Symposium On Communications & Vehicular Technology », qui s'est tenue en novembre 2007, décrit un dispositif de réorganisation opportuniste des porteuses mises en oeuvre dans une communication radio selon une technologie de type OFDM. Avec cette technologie, les données utiles sont modulées avec une pluralité de porteuses, comprenant des porteuses pilotes qui ne sont pas utilisées pour la modulation de données, mais servent aux émetteurs/récepteurs notamment pour évaluer le canal radio et construire une synchronisation.

Dans certains cas, certaines porteuses pilotes se trouvent aussi occupées par des données d'un utilisateur licencié. Pour mettre fin aux interférences induites, la ou les porteuses pilotes en question sont désactivées et basculées sur d'autres porteuses restées libres, de façon opportuniste, selon une stratégie qui varie en fonction du type d'interférence rencontré (narrowband ou wideband). Cette stratégie vise à limiter l'impact de la réorganisation des porteuses dans la bande de fréquences sur la détection des symboles pilotes par le récepteur, ce dernier n'étant pas informé par l'émetteur des modalités de cette réorganisation.

Il existe donc le besoin d'une technique de détermination d'un canal pilote dans un système de radiocommunication opportuniste ne nécessitant pas l'utilisation ou la mise en place de ressources dédiées.

A cette fin, l'invention propose un procédé de création d'un canal pilote dans un système de radiocommunication opportuniste dont le spectre de fréquences comporte un ensemble de bandes de fréquence et pour lequel système les trames successives d'un canal de radiocommunication sont divisées en intervalles de temps, comportant des étapes de :

- sélection opportuniste d'une bande de fréquence libre dans le spectre de fréquences, pour supporter le canal pilote,
- émission, sur la bande de fréquence libre sélectionnée, d'un signal balise sur au moins un intervalle de temps des trames successives du canal pilote et sondage de ladite bande de fréquence libre sur au moins un intervalle de temps distinct du précédent.

Selon une caractéristique préférée, la sélection opportuniste d'une bande de fréquence libre dans le spectre de fréquences s'effectue à partir d'une table d'état du spectre de fréquences.

Selon une caractéristique préférée, la table d'état du spectre de fréquences est obtenue par sondage de l'ensemble des bandes de fréquence du spectre de fréquences et comporte, au moins, pour chaque bande de fréquence, une information sur l'état d'occupation de la bande de fréquence.

La création d'un canal pilote selon l'invention s'effectue de manière opportuniste sur une bande de fréquence libre du spectre à partir de la seule connaissance de l'état du spectre.

Il n'est donc pas nécessaire de dédier des ressources du spectre, en l'occurrence une bande de fréquence, pour supporter le canal pilote. Ainsi, l'utilisation des ressources du spectre de fréquences est optimisée.

De même, il n'est pas nécessaire de créer de nouvelles ressources pour supporter le canal pilote.

L'émission permanente d'un signal balise facilite la détection du canal pilote par un terminal du système de radiocommunication opportuniste.

Le sondage de la bande de fréquence supportant le canal pilote permet de s'assurer en permanence de la disponibilité de cette bande de fréquence.

Selon une caractéristique préférée, l'étape de sélection opportuniste d'une bande de fréquence libre comporte également la sélection d'au moins une bande de fréquence libre de secours.

La sélection d'au moins une autre bande de fréquence de secours permet en cas de besoin, notamment si la bande de fréquence sélectionnée initialement pour supporter le canal pilote n'est plus disponible, de rétablir rapidement le canal pilote.

Selon une caractéristique préférée, le procédé selon l'invention comporte en outre des étapes de :

- synchronisation sur le canal pilote d'un équipement d'accès et d'un terminal du système de radiocommunication opportuniste,
- établissement d'une communication sur le canal pilote entre l'équipement d'accès et le terminal.

Selon une caractéristique préférée, le procédé selon l'invention comporte, en outre, préalablement aux étapes de synchronisation et d'établissement d'une communication, une étape de :

- détection du canal pilote par le terminal.

Selon une caractéristique préférée, la communication entre le terminal et l'équipement d'accès s'effectue sur plusieurs trames successives du canal pilote, au cours d'un au moins intervalle de temps de même rang pour chacune des trames successives, lequel intervalle de temps est préalablement choisi par le terminal.

Ainsi, l'utilisation du canal pilote est optimisée.

Selon une caractéristique préférée, le procédé selon l'invention comporte, en outre, une étape de détection de conflit entre plusieurs terminaux, par l'équipement d'accès, pour le choix de l'un au moins intervalle de temps destiné à la communication.

Selon une caractéristique préférée, le procédé selon l'invention comporte, en outre, une étape de résolution de conflit entre plusieurs terminaux, par les terminaux eux-mêmes, pour le choix de l'un au moins intervalle de temps destiné à la communication.

La détection des conflits, pour le choix d'un au moins intervalle de temps destiné à une communication sur le canal pilote, par l'équipement d'accès et leur résolution par le terminal présente l'avantage de fiabiliser la communication sur le canal pilote sans employer des mécanismes de gestion d'accès centralisés.

Selon une caractéristique préférée, le procédé selon l'invention comporte, en outre, une étape de rétablissement, par l'équipement d'accès, du canal pilote sur la bande de fréquence libre sélectionnée, après interruption du canal pilote par l'équipement d'accès.

Selon une caractéristique préférée, le procédé selon l'invention comporte, en outre, une étape de rétablissement, par l'équipement d'accès, du canal pilote sur l'une au moins bande de fréquence libre de secours, après interruption du canal pilote par l'équipement d'accès.

La gestion opportuniste du canal pilote permet en cas d'interruption de celui-ci de le recréer automatiquement. L'existence d'au moins une bande de fréquence libre de secours et la possibilité de recréer le canal pilote sur une de ces bandes de fréquence permet de diminuer le temps d'interruption du canal pilote.

L'invention concerne également un équipement d'accès apte à fonctionner dans un système de radiocommunication opportuniste dont le spectre de fréquences comporte un ensemble de bandes de fréquence et pour lequel système les trames successives d'un canal de radiocommunication sont divisées en intervalles de temps, cet équipement d'accès comportant :

- des moyens de sélection opportuniste d'une bande de fréquence libre dans le spectre de fréquences, pour supporter un canal pilote,
- des moyens d'émission, sur la bande de fréquence libre sélectionnée, d'un signal balise sur au moins un intervalle de temps des trames successives du canal pilote et de sondage de la bande de fréquence libre sur au moins un intervalle de temps distinct du précédent.

L'invention concerne aussi un terminal apte à fonctionner dans un système de radiocommunication opportuniste dont le spectre de fréquences comporte un ensemble de bandes de fréquence et pour lequel système les trames successives d'un canal de radiocommunication sont divisées en intervalles de temps, ce terminal comportant :

- des moyens de détection d'un canal pilote par détection d'un signal balise émis par un équipement d'accès du système de radiocommunication opportuniste,
- des moyens de synchronisation sur le canal pilote avec l'équipement d'accès,
- des moyens d'établissement d'une communication sur le canal pilote avec l'équipement d'accès, sur plusieurs trames successives du canal pilote, au cours d'un au moins intervalle de temps de même rang pour chacune des trames successives, lequel un au moins intervalle de temps est préalablement choisi par le terminal.

L'invention concerne aussi un produit programme d'ordinateur mis en oeuvre dans un équipement d'accès, apte à fonctionner dans un système de radiocommunication opportuniste dont le spectre de fréquences comporte un ensemble de bandes de fréquence et pour lequel système les trames successives d'un canal de radiocommunication sont divisées en intervalles de temps, caractérisé en ce qu'il comporte des instructions nécessaires à la réalisation des étapes du procédé, telles que décrites ci-dessus, lorsque ces étapes sont réalisées par l'équipement d'accès.

L'invention concerne également un produit programme d'ordinateur mis en oeuvre dans un terminal, apte à fonctionner dans un système de radiocommunication opportuniste dont le spectre de fréquences comporte un ensemble de bandes de fréquence et pour lequel système les trames successives d'un canal de radiocommunication sont divisées en intervalles de temps, caractérisé en ce qu'il comporte des instructions nécessaires à la réalisation des étapes du procédé, telles que décrites ci-dessus, lorsque ces étapes sont réalisées par le terminal.

L'invention sera mieux comprise à la lumière de la description qui suit d'un mode particulier de réalisation d'un procédé, selon l'invention, de création d'un canal pilote dans un système de radiocommunication opportuniste en référence aux dessins annexés sur lesquels :

- la figure 1 représente un organigramme du procédé, selon l'invention, de création d'un canal pilote dans un système de radiocommunication opportuniste,
- la figure 2A illustre un spectre de fréquences d'un système de radiocommunication opportuniste,
- la figure 2B illustre une trame d'un canal de radiocommunication opportuniste,
- la figure 3A illustre un mode particulier d'émission d'un signal balise et de sondage d'une bande de fréquence sur une trame d'un canal pilote de radiocommunication opportuniste telle que celle représentée à la figure 2B,
- la figure 3B illustre une variante du mode particulier d'émission d'un signal balise et de sondage d'une bande de fréquence sur une trame d'un canal pilote de radiocommunication tel qu'illustré à la figure 3A,
- les figures 4A et 4B illustrent le déroulement d'une communication sur respectivement deux trames successives d'un canal pilote de radiocommunication opportuniste telles que celle représentée à la figure 2B,
- la figure 5 représente un système de radiocommunication opportuniste,
- la figure 6 représente un équipement d'accès dans un système de radiocommunication opportuniste tel que celui représenté à la figure 5,
- la figure 7 représente un terminal dans un système de radiocommunication opportuniste tel que celui représenté à la figure 5.

L'invention est décrite ci-dessous pour un système de radiocommunication opportuniste dans lequel on souhaite établir une liaison de communication entre un équipement d'accès et un terminal sur la base d'un accès opportuniste aux ressources du spectre de fréquences.

L'établissement d'une liaison de communication entre un équipement d'accès et un terminal est précédé par la création d'un canal pilote.

Dans le mode de réalisation de l'invention, le canal pilote est créé de manière opportuniste.

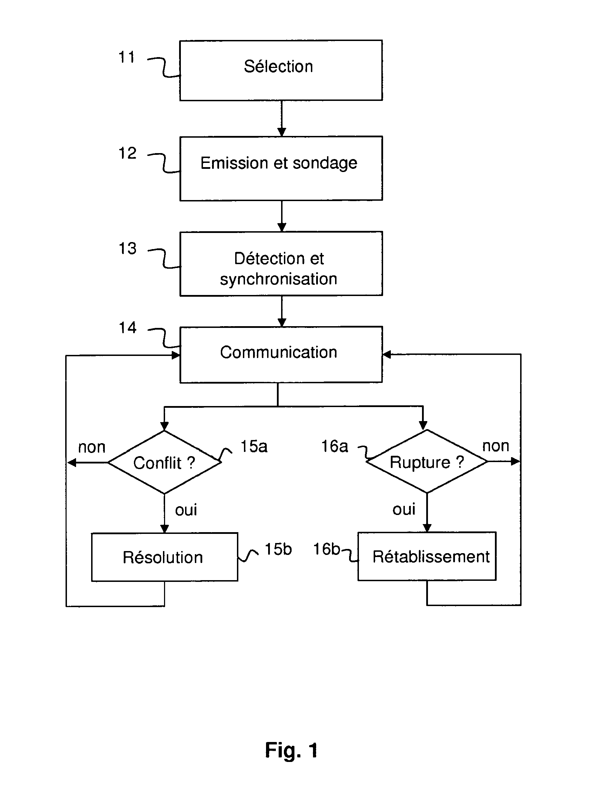

La **figure 1** représente un organigramme du procédé, selon l'invention, de création d'un canal pilote dans un système de radiocommunication opportuniste.

En référence à la figure 1, le procédé comporte une étape 11 au cours de laquelle on effectue une sélection opportuniste d'au moins une bande de fréquence libre dans le spectre de fréquences du système de radiocommunication opportuniste considéré. Cette bande de fréquence est destinée à supporter un canal pilote.

Dans un système de radiocommunication opportuniste, le spectre de fréquences W est divisé en sous-bandes de fréquence. Pour simplifier, dans la suite de l'exposé, on utilise l'expression bande de fréquence pour désigner une sous-bande de fréquence du spectre W.

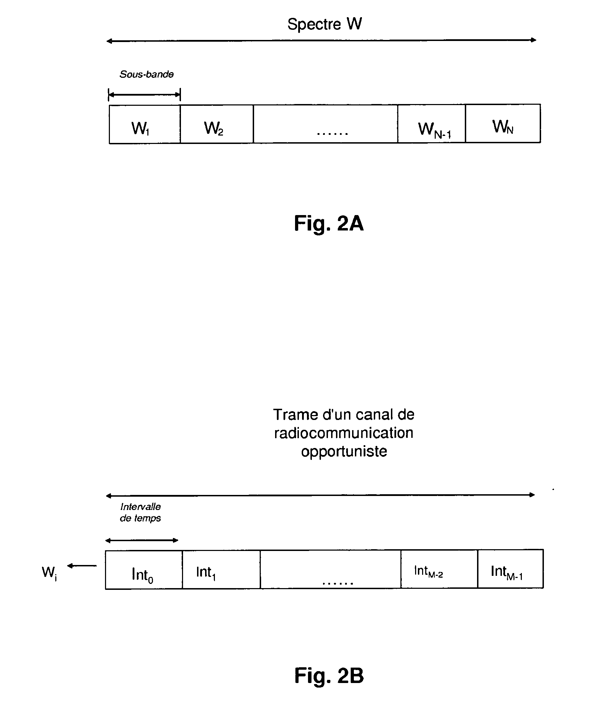

La **figure 2A** illustre un spectre de fréquences d'un système de radiocommunication opportuniste.

Le spectre de fréquences W est divisé en N bandes $W_i$ avec i variant de 1 à N, tel que :

$$|W| = \sum_{i=1}^{N} |W_i|$$

où | | symbolise la largeur du spectre de fréquences W et la largeur d'une bande de fréquence $W_i$ en Hz.

Un équipement de radiocommunication opportuniste, tel qu'un équipement d'accès ou un terminal, dispose d'une table d'état du spectre de fréquences W.

Cette table comporte, entre autres, des données caractéristiques d'une bande de fréquence $W_i$ telles que :
bande_id; état; c_coeff.

La donnée "bande_id" correspond à l'identifiant de la bande de fréquence $W_i$, avec i variant de 1 à N.

La donnée "état" correspond à l'état de la bande de fréquence $W_i$ et a une valeur différente selon que la bande est inconnue, libre ou occupée. Si la bande de fréquence $W_i$ est occupée, elle peut être occupée par un service "primaire" (service pour lequel la bande de fréquence est réglementairement dédiée) ou par un service de radiocommunication opportuniste. La donnée "état" prend une valeur différente selon la nature du service qui occupe la bande de fréquence $W_i$.

La détection et la détermination de l'état du spectre de fréquences W sont assurées par un sondage du spectre.

La donnée "c_coeff" est un coefficient de confiance relativement à l'état de la bande de fréquence $W_i$. Sa valeur initiale est fournie par le sondage et tient compte des incertitudes possibles liées à ce sondage. Si une bande de fréquence n'est pas sondée pendant une longue période, la valeur du coefficient de confiance décroît. Lorsque cette même bande de fréquence est à nouveau sondée et si son état n'a pas changé par rapport au précédent sondage, alors la valeur du coefficient de confiance croît. A chaque fois que l'état d'une bande de fréquence change, le coefficient de confiance affecté à cette bande de fréquence est initialisé avec la valeur fournie par

le sondage.

Chaque fois qu'un équipement de radiocommunication opportuniste, équipement d'accès ou terminal, sonde une bande de fréquence $W_i$ du spectre W, il met à jour sa table d'état du spectre relativement à cette bande.

Plusieurs équipements de radiocommunication opportunistes peuvent échanger leurs tables d'état du spectre respectives pour mettre en commun leur vision du spectre. Lorsque la donnée "état" relative à une même bande de fréquence est identique dans les tables d'état du spectre échangées par les différents équipements alors le coefficient de confiance correspondant augmente.

Au cours de l'étape 11, l'équipement d'accès sélectionne une première bande de fréquence libre, c'est-à-dire une bande de fréquence sur laquelle il n'y a pas de trafic.

L'équipement d'accès effectue ce choix à partir des informations disponibles dans sa table d'état du spectre de fréquences W, notamment à partir de la valeur de la donnée "état".

De la même façon, une autre bande de fréquence libre est sélectionnée pour assurer si besoin une solution de secours en cas d'indisponibilité de la bande initialement sélectionnée.

En variante, plusieurs bandes de fréquence libres peuvent être sélectionnés comme bandes de fréquence de secours.

Au cours d'une étape 12, l'équipement d'accès réalise deux opérations sur la bande de fréquence libre sélectionnée à l'étape 11 précédente :

- la première opération est l'émission d'un signal balise B,
- la seconde opération est un sondage S de la bande de fréquence considérée.

Dans un système de radiocommunication opportuniste, les signaux sont transmis sur une bande de fréquence selon un mode de transmission, comme par exemple le mode TDMA (pour *Time Division Multiple Access* en anglais).

Dans le mode TDMA, la trame d'un canal de radiocommunication opportuniste est divisée en M intervalles de temps ($Int_0$, ..., $Int_{M-1}$) où M est un paramètre du système de radiocommunication opportuniste considéré.

La **figure 2B** illustre une trame d'un canal de radiocommunication opportuniste.

En référence à la figure 2B, la trame du canal pilote est divisée en M intervalles de temps ($Int_0$, ..., $Int_{M-1}$).

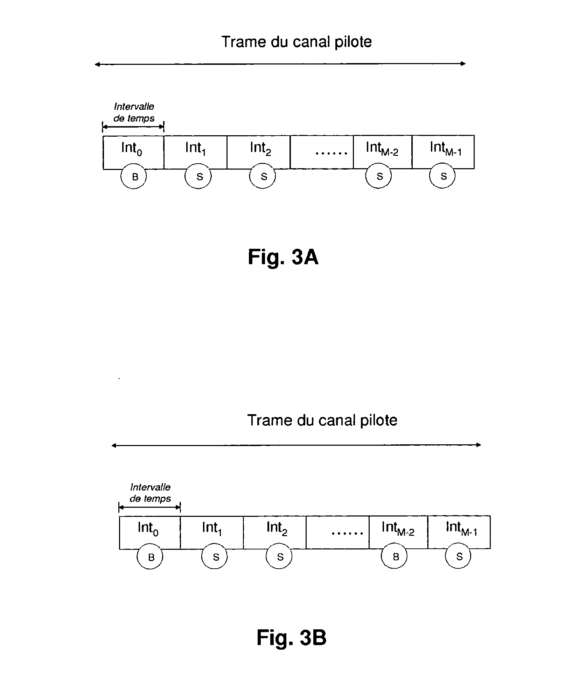

La **figure 3A** illustre un mode particulier d'émission d'un signal balise et de sondage d'une bande de fréquence sur une trame d'un canal pilote de radiocommunication opportuniste telle que celle représentée à la figure 2B.

L'équipement d'accès émet un signal balise B au cours d'un intervalle de temps de la trame du canal pilote.

A titre d'exemple non limitatif de l'invention donné par la figure 3A, l'équipement d'accès émet un signal balise B au cours du premier intervalle de temps $Int_0$.

La **figure 3B** illustre une variante du mode particulier d'émission d'un signal balise et de sondage d'une bande de fréquence sur une trame d'un canal pilote de radiocommunication tel qu'illustré à la figure 3A.

Selon cette variante, le signal balise B est émis au cours de plusieurs intervalles de temps d'une même trame du canal pilote.

A titre d'exemple donné sur la figure 3A, l'équipement d'accès émet un signal balise B au cours des intervalles de temps $Int_0$ et $Int_{M-2}$.

Le signal balise B est émis sur toutes les trames successives du canal pilote. Il est émis pendant toute la durée d'un intervalle de temps.

De manière générale, un signal balise contient, entre autres, les informations suivantes :

- un identifiant d'un service de radiocommunication opportuniste,
- une liste des intervalles de temps libres dans la trame du canal de radiocommunication opportuniste,
- les numéros des intervalles de temps au cours desquels le signal balise est transmis (dans le cas où le signal balise est émis plusieurs fois sur une même trame).

L'équipement d'accès effectue aussi un sondage S de la bande de fréquence sélectionnée pour supporter le canal pilote.

Le sondage permet de remplir la table d'état du spectre de fréquences telle que décrite ci-dessus.

Comme représenté sur les figures 3A et 3B, à titre d'exemples non limitatifs de l'invention, ce sondage S est réalisé au cours de plusieurs intervalles de temps sur une trame du canal pilote.

Sur l'exemple illustré par la figure 3A, ce sondage est réalisé sur les intervalles de temps $Int_1$, $Int_2$, $Int_{M-2}$ et $Int_{M-1}$ de la trame du canal pilote.

Sur l'exemple illustré par la figure 3B, ce sondage est réalisé sur les intervalles de temps $Int_1$, $Int_2$ et $Int_{M-1}$ de la trame du canal pilote.

Au cours d'un intervalle de temps, le sondage peut être réalisé selon différents modes :

- l'intervalle de temps sert à sonder une seule bande de fréquence, la bande de fréquence du canal pilote,
- l'intervalle de temps sert à sonder deux ou plus de deux bandes de fréquence, dont celle du canal pilote. L'intervalle de temps est alors découpé en portions de temps correspondant à chacune des bandes de fréquence sondées.

Les intervalles de temps sur lesquels le sondage est réalisé sont distincts des intervalles de temps au cours desquels le signal balise est émis.

Dans la suite de l'exposé on considère, à titre d'illustration non limitative de l'invention, qu'un signal balise est émis au moins au cours de l'intervalle de temps $Int_0$ et qu'un sondage de la bande de fréquence est effectué au moins sur l'intervalle de temps $Int_{M-1}$ de la trame du canal pilote. Ainsi, pour deux trames successives, le sondage est effectué sur le dernier intervalle de temps de la première trame et le signal balise est émis au cours du premier intervalle de temps de la trame suivante.

A l'issue des étapes 11 et 12, l'équipement d'accès a créé un canal pilote de manière opportuniste.

Afin que, par la suite, une liaison de communication puisse être établie entre un équipement d'accès et un terminal, les conditions suivantes doivent être remplies par les deux équipements concernés :

- le choix de la même bande de fréquence pour communiquer,
- la synchronisation sur un même intervalle de temps.

Ces conditions sont remplies au cours d'une étape 13, représentée sur la figure 1, de détection par le terminal d'un canal pilote et de synchronisation du terminal et de l'équipement d'accès sur ce canal pilote.

Afin de choisir la même bande de fréquence qu'un équipement d'accès pour communiquer, un terminal commence par détecter un canal pilote créé par un équipement d'accès desservant la zone géographique dans laquelle il se situe.

Pour cela, le terminal sonde le spectre de fréquences W à la recherche d'un signal balise B comportant un identifiant d'un service de radiocommunication opportuniste.

Quand le terminal détecte un signal balise B, il extrait les informations contenues dans ce signal.

Ensuite, le terminal se synchronise avec l'équipement d'accès. Le terminal et l'équipement d'accès se synchronisent sur l'intervalle de temps au cours duquel est émis le signal balise B (par exemple, le premier intervalle de temps $Int_0$ de la trame ou un autre intervalle de temps si le signal balise est émis plusieurs fois sur une même trame).

En référence à la figure 1, lors d'une étape 14, le terminal et l'équipement d'accès établissent une communication sur le canal pilote notamment pour négocier les paramètres de la liaison de communication à établir dans le mode de réalisation de l'invention décrit.

Le terminal et l'équipement d'accès communiquent sur plusieurs trames successives du canal pilote. La communication s'effectue au cours d'un intervalle de temps choisi, de même rang pour toutes les trames successives. Sur une trame donnée, au cours de l'intervalle de temps choisi, le terminal émet et l'équipement d'accès reçoit, puis, sur la trame suivante, au cours de l'intervalle de temps choisi de même rang, l'équipement d'accès émet et le terminal reçoit et ainsi de suite sur les différentes trames successives.

Le choix de l'intervalle de temps pour la communication entre le terminal et l'équipement d'accès est effectué aléatoirement par le terminal. Pour cela, le terminal choisit un intervalle de temps libre dans la trame du canal pilote à partir de la liste des intervalles de temps libres contenue dans le signal balise.

Si l'intervalle de temps libre choisi se trouve après l'intervalle de temps d'émission du signal balise sur lequel se sont synchronisés le terminal et l'équipement d'accès alors la communication commence dès la trame en cours. C'est par exemple le cas, lorsque le terminal et l'équipement d'accès se sont synchronisés sur l'intervalle de temps $Int_0$ d'émission du signal balise.

Dans le cas contraire, c'est-à-dire si l'intervalle de temps libre choisi se trouve avant l'intervalle de temps d'émission du signal balise ayant servi à la synchronisation, alors la communication démarre lors de la trame suivante.

Après avoir choisi un intervalle de temps libre pour communiquer, le terminal émet, au cours de cet intervalle de temps et sur la trame telle que définie précédemment, un signal comportant des informations de signalisation.

L'équipement d'accès qui est alors en mode réception, détecte le signal émis par le terminal et en déduit l'intervalle de temps libre choisi par ce terminal pour communiquer. A partir de ces éléments, l'équipement d'accès met à jour les informations contenues dans le signal balise, notamment la liste des intervalles de temps libres.

A l'issue de l'étape 14, une communication est donc établie entre l'équipement d'accès et le terminal. Cette communication s'effectue sur plusieurs trames successives du canal pilote, sur la base d'une transmission au cours de l'intervalle de temps choisi par le terminal et de même rang pour chacune des trames successives.

Selon une variante, le terminal peut choisir plusieurs intervalles de temps dans la trame du canal pilote pour établir une communication avec l'équipement d'accès.

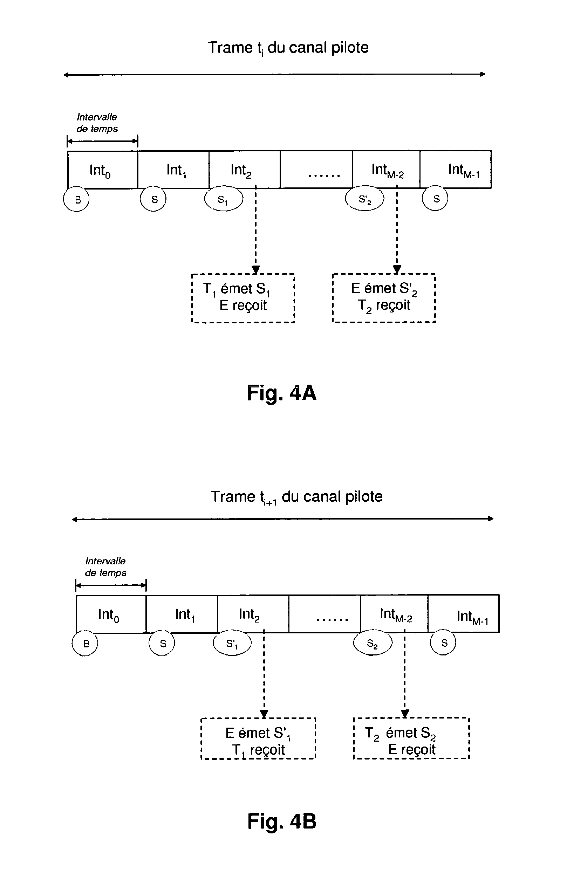

Les **figures 4A** et **4B** illustrent le déroulement d'une communication sur respectivement deux trames successives d'un canal pilote de radiocommunication opportuniste telles que celle représentée à la figure 2B.

La figure 4A représente une trame $t_i$ du canal pilote sur laquelle :

- l'équipement d'accès E émet un signal balise B au cours de l'intervalle de temps $Int_0$,
- l'équipement d'accès E sonde la bande de fréquence au cours de l'intervalle de temps $Int_1$ et au cours du dernier intervalle de temps $Int_{M-1}$,
- un terminal $T_1$ émet un signal $S_1$ au cours de l'intervalle de temps choisi $Int_2$ alors que l'équipement d'accès E reçoit au cours de cet intervalle de temps,
- l'équipement d'accès E émet un signal $S'_2$ au cours de l'intervalle de temps choisi $Int_{M-2}$ alors qu'un terminal $T_2$ reçoit au cours de cet intervalle de temps.

La figure 4B représente la trame $t_{i+1}$ suivant la trame $t_i$ du canal pilote sur laquelle :

- l'équipement d'accès E émet le signal balise B au cours de l'intervalle de temps $Int_0$,
- l'équipement d'accès E sonde la bande de fréquence au cours de l'intervalle de temps $Int_1$ et au cours du dernier intervalle de temps $Int_{M-1}$,
- l'équipement d'accès E émet un signal $S'_1$ au cours de l'intervalle de temps choisi $Int_2$ alors que le terminal $T_1$ reçoit au cours de cet intervalle de temps,
- le terminal $T_2$ émet un signal $S_2$ au cours de l'intervalle de temps choisi $Int_{M-2}$ alors que l'équipement d'accès E reçoit au cours de cet intervalle de temps.

Les étapes 15a et 15b, représentées à la figure 1, sont respectivement des étapes de détection et de résolution de conflit.

Lorsque, sur une trame $t_c$, plusieurs terminaux détectent le même signal balise émis par un équipement d'accès puis, choisissent aléatoirement un au moins intervalle de temps libre pour communiquer avec cet équipement d'accès, il peut arriver qu'ils choisissent le même au moins intervalle de temps.

Quand, sur la trame suivante $t_{c+1}$, les terminaux émettent au cours de l'intervalle de temps qu'ils ont précédemment choisi, l'équipement d'accès détecte le conflit. Dans la mesure où il y a conflit, l'équipement d'accès ne modifie par la liste des intervalles de temps libres dans la liste des intervalles de temps libres du signal balise émis au cours de l'intervalle de temps $Int_0$, pris comme exemple.

Sur la trame suivante $t_{c+2}$, l'équipement d'accès n'émet pas en raison du conflit. L'équipement d'accès reste en mode réception. Les terminaux qui sont alors en mode réception ne reçoivent aucun signal de la part de l'équipement d'accès et en déduisent qu'un conflit est survenu.

Les terminaux en conflit renouvellent alors le choix aléatoirement d'un au moins intervalle de temps libre à partir de la liste des intervalles de temps libres contenue dans le signal balise émis au cours de l'intervalle de temps $Int_0$ considéré à titre d'exemple.

Sur la trame $T_{c+2}$, au cours de laquelle l'équipement d'accès reste en mode réception (du fait d'un conflit entre des terminaux), d'autres terminaux qui choisissent un au moins intervalle de temps libre (sur la base des informations comprises dans le signal balise du premier intervalle de temps $Int_0$ qui n'a pas été actualisé) peuvent choisir l'intervalle de temps pour lequel il y a déjà conflit.

Ceci peut être évité de la façon suivante :

- quand un au moins intervalle de temps est choisi par un premier terminal et avant toute transmission d'information, le terminal effectue un contrôle de la liste des intervalles de temps libres contenue dans le signal balise du premier intervalle de temps $Int_0$. Si l'état de l'intervalle de temps choisi a changé de statut, cela signifie qu'un autre terminal a entre temps choisi cet intervalle de temps. Ainsi le premier terminal ne transmet pas d'information mais relance le processus de choix d'un au moins intervalle de temps libre.

En référence à la figure 1, les étapes 16a et 16b sont respectivement des étapes de détection d'interruption et de rétablissement du canal pilote.

L'équipement d'accès peut être amené à interrompre le canal pilote. C'est par exemple le cas, lorsque au cours des intervalles de temps pendant lesquels l'équipement d'accès sonde la bande de fréquence utilisée pour supporter le canal pilote, il détecte que celle-ci est désormais occupée par un service "primaire" (service pour lequel la bande de fréquence est réglementairement dédiée).

A chaque trame successive, le terminal détecte et analyse le contenu du signal balise du premier intervalle de temps $Int_0$, considéré à titre d'exemple, de la trame considérée.

Si le terminal ne détecte pas un signal balise au cours du premier intervalle de temps $Int_0$ d'une trame alors il en déduit que l'équipement d'accès a changé de bande de fréquence pour supporter le canal pilote.

Pour résoudre ce cas de figure, le terminal dispose des solutions suivantes :

- le terminal bascule vers une au moins des bandes de fréquence de secours sélectionnées au cours de l'étape 11 et essaie de détecter un signal balise sur cette bande de fréquence. S'il y parvient, cela signifie que le canal pilote a été rétabli sur cette bande de fréquence de secours. S'il n'y parvient pas, il revient sur la bande de fréquence initialement sélectionnée pour supporter le canal pilote et essaie à nouveau de détecter un signal balise sur cette bande de fréquence. S'il n'y parvient pas au bout d'un nombre limité de tentatives, il relance un processus complet de recherche d'un canal pilote.
- Si un canal trafic est actif entre l'équipement d'accès et le terminal, il est possible d'utiliser temporairement une partie des capacités de ce canal trafic pour négocier le rétablissement du canal pilote.

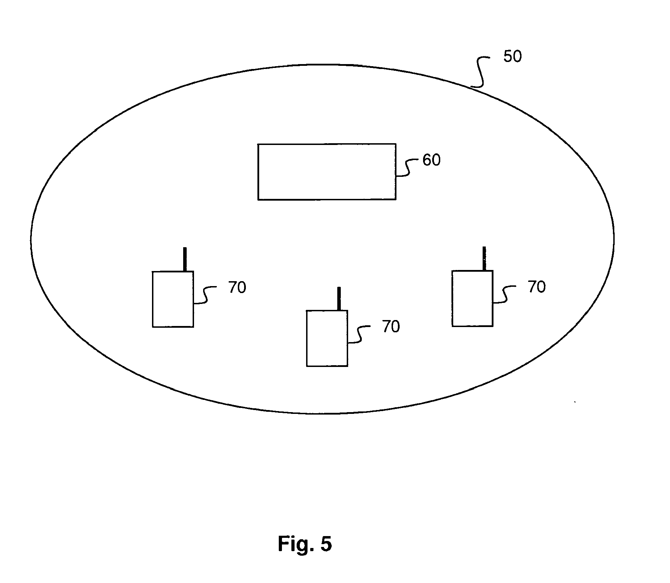

La **figure 5** représente un système de radiocommunication opportuniste.

Dans le système de radiocommunication opportuniste 50 représenté à la figure 5, on crée un canal pilote entre un équipement d'accès 60 et un terminal 70 selon le mode de réalisation de l'invention décrit précédemment.

L'équipement d'accès peut être une station de base ou tout autre équipement d'accès à un réseau de radiocommunication. Le terminal peut être un terminal utilisateur.

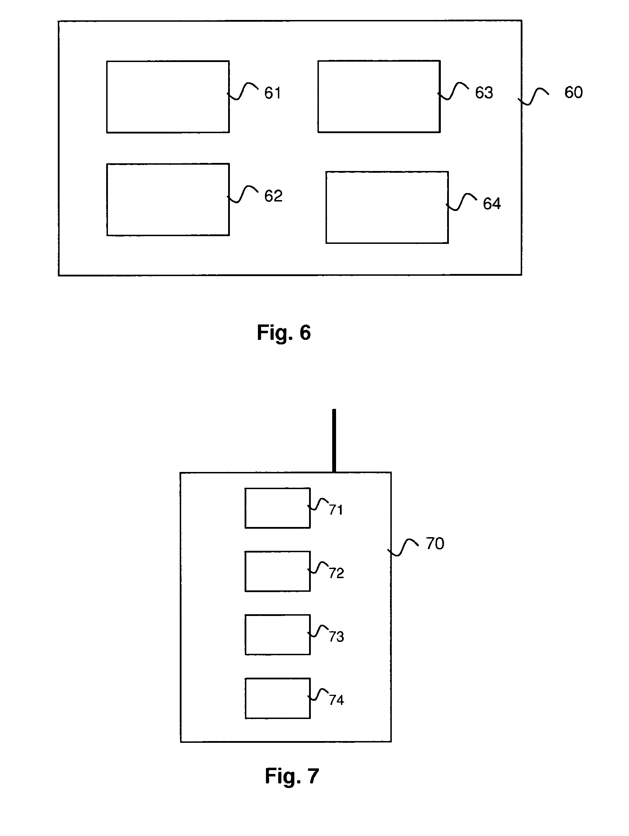

La **figure 6** représente un équipement d'accès dans un système de radiocommunication opportuniste tel que celui représenté à la figure 5.

L'équipement d'accès 60, représenté à la figure 6, est apte à fonctionner dans un système de radiocommunication opportuniste dont le spectre de fréquences W comporte un ensemble de N bandes de fréquence et pour lequel système les trames successives d'un canal de radiocommunication sont divisées en intervalles de temps.

L'équipement d'accès 60 comporte des moyens 61 de sélection opportuniste d'une bande de fréquence libre dans le spectre de fréquences W pour supporter un canal pilote.

L'équipement d'accès 60 dispose d'une table d'état du spectre de fréquences W comportant des données caractéristiques de chacune des N bandes de fréquence $W_i$ (avec i variant de 1 à N). La table d'état du spectre comporte, entre autres, une donnée "état" qui correspond à l'état de la bande $W_i$. La donnée état a une valeur différente selon que la bande est inconnue, libre ou occupée.

Les moyens 61 effectuent la sélection d'une bande de fréquence libre à partir de la valeur de la donnée "état" contenue dans la table d'état du spectre de fréquences W, tel que précédemment décrit à l'étape 11.

Les moyens 61 effectuent également la sélection d'une au moins bande de fréquence libre supplémentaire pour assurer si besoin une solution de secours en cas d'indisponibilité de la bande initialement sélectionnée.

L'équipement d'accès 60 comporte également des moyens 62 d'émission d'un signal balise et de sondage d'une bande de fréquence.

La trame d'un canal de radiocommunication opportuniste supporté par une bande de fréquence est divisée en M intervalles de temps ($Int_0$, ..., $Int_{M-1}$) où M est un paramètre du système de radiocommunication opportuniste considéré. De la même façon, la trame du canal pilote est divisée en M intervalles de temps ($Int_0$, ..., $Int_{M-1}$).

En référence à l'étape 12, les moyens 62 émettent un signal balise B au cours d'un intervalle de temps de la trame du canal pilote ou en variante au cours de plusieurs intervalles de temps d'une même trame du canal pilote.

Les moyens 62 effectuent aussi un sondage S de la bande de fréquence supportant le canal pilote au cours de plusieurs intervalles de temps de la trame du canal pilote.

L'équipement d'accès 60 comporte aussi des moyens 63 de synchronisation avec un terminal 70 du système de radiocommunication opportuniste sur le canal pilote.

En référence à l'étape 13, l'équipement d'accès 60 se synchronise avec un terminal 70 sur un intervalle de temps au cours duquel est émis le signal balise.

L'équipement d'accès 60 comporte aussi des moyens 64 d'établissement d'une communication entre l'équipement d'accès 60 et un terminal 70 sur le canal pilote.

En référence à l'étape 14, la communication est établie entre l'équipement d'accès 60 et un terminal 70 et se déroule sur plusieurs trames successives du canal pilote, sur la base d'une transmission au cours d'un au moins intervalle de temps de même rang pour chacune des trames successives. L'intervalle de temps pour la communication est choisi par le terminal 70.

L'équipement d'accès 60 comprend, en outre, une unité centrale de commande, non représentée, connectée à chacun des moyens 61 à 64 et adaptée pour commander leur fonctionnement.

Les moyens 61 à 64 peuvent être des modules logiciels formant un programme d'ordinateur. L'invention concerne donc également un programme d'ordinateur pour un équipement d'accès 60, comprenant des instructions logicielles nécessaires à la réalisation des étapes mises en oeuvre par l'équipement d'accès 60.

Un module logiciel peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

La **figure 7** représente un terminal dans un système de radiocommunication opportuniste tel que celui représenté à la figure 5.

Le terminal 70, représenté à la figure 7, est apte à fonctionner dans un système de radiocommunication opportuniste dont le spectre de fréquences W comporte un ensemble de N bandes de fréquence et pour lequel système les trames successives d'un canal de radiocommunication sont divisées en intervalles de temps.

Le terminal 70 comporte des moyens 71 de détection d'un canal pilote. Les moyens 71 sondent le spectre de fréquences W à la recherche d'un signal balise B comportant un identifiant d'un service de radiocommunication opportuniste tel que précédemment décrit à l'étape 13.

Le terminal 70 comporte également des moyens 72 de synchronisation avec un équipement d'accès du système de radiocommunication opportuniste sur le canal pilote détecté par les moyens 71 de détection d'un canal pilote.

En référence à l'étape 13, le terminal 70 se synchronise avec un équipement d'accès 60 sur un intervalle de temps au cours duquel est émis le signal balise B.

Le terminal 70 comporte aussi des moyens 73 de choix d'un au moins intervalle de temps sur la trame du canal pilote pour établir une communication avec un équipement d'accès 60 sur ce canal pilote.

Pour établir une communication, le terminal 70 choisit aléatoirement un au moins intervalle de temps libre dans la trame du canal pilote à partir d'une liste des intervalles de temps libres contenue dans le signal balise, tel que précédemment décrit à l'étape 14.

Le terminal 70 comporte aussi des moyens 74 d'établissement d'une communication avec un équipement d'accès 60 sur le canal pilote.

En référence à l'étape 14, la communication est établie entre le terminal et un équipement d'accès 60 et se déroule sur plusieurs trames successives du canal pilote, sur la base d'une transmission au cours d'un au moins intervalle de temps choisi par le terminal et de même rang pour chacune des trames successives.

Le terminal 70 comprend, en outre, une unité centrale de commande, non représentée, connectée à chacun des moyens 71 à 74 et adaptée pour commander leur fonctionnement.

Les moyens 71 à 74 peuvent être des modules logiciels formant un programme d'ordinateur. L'invention concerne donc également un programme d'ordinateur pour un terminal 70 comprenant des instructions logicielles nécessaires à la réalisation des étapes mises en oeuvre par le terminal 70.

Un module logiciel peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

L'invention telle que décrite précédemment peut être appliquée dans des protocoles de connexion sans fil pour des réseaux domestiques et des réseaux de capteurs. De tels systèmes peuvent être déployés sur des bandes de fréquence utilisables sans licence.

Par ailleurs, l'invention peut être appliquée pour des extensions "opportunistes" des systèmes actuels tels que le Wi-Fi (pour *Wireless Fidelity* en anglais) et le GSM (pour *Global System for Mobile communication* en anglais) en spécifiant un canal pilote et en permettant la renégociation des canaux physiques à la volée.

## Revendications

1. Procédé de création d'un canal pilote dans un système de radiocommunication opportuniste dont le spectre de fréquences comporte un ensemble de bandes de fréquence et pour lequel système les trames successives d'un canal de radiocommunication sont divisées en intervalles de temps, **caractérisé en ce qu'**il comporte des étapes suivantes, mises en oeuvre par un équipement d'accès :

   - sélection (11) opportuniste d'une bande de fréquences libre dans le spectre de fréquences, pour supporter le canal pilote,
- émission (12), sur la bande de fréquence libre sélectionnée, d'un signal balise sur au moins un intervalle de temps des trames successives du canal pilote et sondage (12) de ladite bande de fréquence libre sur au moins un intervalle de temps distinct du précédent.

2. Procédé selon la revendication 1, **caractérisé en ce que** la sélection (11) opportuniste d'une bande de fréquence libre dans le spectre de fréquences s'effectue à partir d'une table d'état du spectre de fréquences.

3. Procédé selon la revendication 2, **caractérisé en ce que** la table d'état du spectre de fréquences est obtenue par sondage (12) de l'ensemble des bandes de fréquence du spectre de fréquences et comporte, au moins, pour chaque bande de fréquence, une information sur l'état d'occupation de la bande de fréquence.

4. Procédé selon l'une quelconque des revendications 1 à 3, **caractérisé en ce que** l'étape de sélection (11) opportuniste d'une bande de fréquence libre comporte également la sélection d'au moins une bande de fréquence libre de secours.

5. Procédé selon l'une quelconque des revendications 1 à 4, **caractérisé en ce qu'**il comporte en outre des étapes de :

    - synchronisation (13) sur le canal pilote d'un équipement d'accès et d'un terminal du système de radiocommunication opportuniste,
    - établissement (14) d'une communication sur le canal pilote entre l'équipement d'accès et le terminal.

6. Procédé selon la revendication 5, **caractérisé en ce qu'**il comporte, en outre, une étape de rétablissement (16b), par l'équipement d'accès, du canal pilote sur la bande de fréquence libre sélectionnée, après interruption du canal pilote (16a) par l'équipement d'accès.

7. Procédé selon la revendication 5, **caractérisé en ce qu'**il comporte, en outre, une étape de rétablissement (16b), par l'équipement d'accès, du canal pilote sur l'une au moins bande de fréquence libre de secours, après interruption du canal pilote (16a) par l'équipement d'accès.

8. Procédé d'utilisation d'un canal pilote dans un système de radiocommunication opportuniste dont le spectre de fréquences comporte un ensemble de bandes de fréquence et pour lequel système les trames successives d'un canal de radiocommunication sont divisées en intervalles de temps, **caractérisé en ce que**, ledit canal pilote ayant été créé selon le procédé de la revendication 1, ledit procédé d'utilisation comporte des étapes suivantes

    - détection (13) du canal pilote par un terminal à l'aide du signal balise;
    - synchronisation du terminal avec l'équipement d'accès; et
    - établissement d'une communication avec l'équipement d'accès..

9. Procédé selon la revendication 8, **caractérisé en ce que** la communication entre le terminal et l'équipement d'accès s'effectue sur plusieurs trames successives du canal pilote, au cours d'un au moins intervalle de temps de même rang pour chacune des trames successives, lequel intervalle de temps est préalablement choisi par le terminal.

10. Procédé selon la revendication 8, **caractérisé en ce qu'**il comporte en outre une étape de détection (15a) de conflit entre plusieurs terminaux, par l'équipement d'accès, pour le choix de l'un au moins intervalle de temps destiné à la communication.

11. Procédé selon les revendications 9 et 10, **caractérisé en ce qu'**il comporte, en outre, une étape de résolution (15b) de conflit entre plusieurs terminaux, par les terminaux eux-mêmes, pour le choix de l'un au moins intervalle de temps destiné à la communication.

12. Equipement d'accès (60) apte à fonctionner dans un système de radiocommunication opportuniste dont le spectre de fréquences comporte un ensemble de bandes de fréquence et pour lequel système les trames successives d'un canal de radiocommunication sont divisées en intervalles de temps, **caractérisé en ce qu'**il comporte :

    - des moyens (61) de sélection opportuniste d'une bande de fréquence libre dans le spectre de fréquences, pour supporter un canal pilote,
    - des moyens (62) d'émission, sur la bande de fréquence libre sélectionnée, d'un signal balise sur au moins un intervalle de temps des trames successives du canal pilote et de sondage de ladite bande de fréquence libre sur au moins un intervalle de temps distinct du précédent.

13. Terminal (70) apte à fonctionner dans un système de radiocommunication opportuniste dont le spectre de fréquences comporte un ensemble de bandes de fréquence et pour lequel système les trames successives d'un canal de radiocommunication sont divisées en intervalles de temps, **caractérisé en ce qu'**il comporte :

- des moyens (71) de détection d'un canal pilote par détection d'un signal balise émis par un équipement d'accès du système de radiocommunication opportuniste,
- des moyens (72) de synchronisation sur le canal pilote avec l'équipement d'accès,
- des moyens (74) d'établissement d'une communication sur le canal pilote avec l'équipement d'accès, sur plusieurs trames successives du canal pilote, au cours d'un au moins intervalle de temps de même rang pour chacune des trames successives, lequel un au moins intervalle de temps est préalablement choisi par le terminal.

14. Produit programme d'ordinateur mis en oeuvre dans un équipement d'accès, apte à fonctionner dans un système de radiocommunication opportuniste dont le spectre de fréquences comporte un ensemble de bandes de fréquences et pour lequel système les trames successives d'un canal de radiocommunication sont divisées en intervalles de temps, **caractérisé en ce qu'**il comporte des instructions nécessaires à la réalisation des étapes du procédé selon les revendications 1 à 7 lorsque ces étapes sont réalisées par l'équipement d'accès.

15. Produit programme d'ordinateur mis en oeuvre dans un terminal, apte à fonctionner dans un système de radiocommunication opportuniste dont le spectre de fréquences comporte un ensemble de bandes de fréquence et pour lequel système les trames successives d'un canal de radiocommunication sont divisées en intervalles de temps, **caractérisé en ce qu'**il comporte des instructions nécessaires à la réalisation des étapes du procédé selon les revendications 8 à 11 lorsque ces étapes sont réalisées par le terminal.

**Claims**

1. Method for creating a pilot channel in an opportunistic radiocommunication system whose frequency spectrum comprises a set of frequency bands and for which system the successive frames of a radiocommunication channel are divided into time intervals, **characterized in that** it comprises the following steps, implemented by an access equipment:

    - opportunistic selection (11) of a free frequency band in the frequency spectrum, to support the pilot channel,
    - sending (12), on the selected free frequency band, of a beacon signal on at least one time interval of the successive frames of the pilot channel and probing (12) of said free frequency band on at least one time interval distinct from the previous one.

2. Method according to Claim 1, **characterized in that** the opportunistic selection (11) of a free frequency band in the frequency spectrum is performed on the basis of a state table of the frequency spectrum.

3. Method according to Claim 2, **characterized in that** the state table of the frequency spectrum is obtained by probing (12) the whole set of frequency bands of the frequency spectrum and comprises, at least, for each frequency band, an item of information on the occupancy state of the frequency band.

4. Method according to any one of Claims 1 to 3, **characterized in that** the step of opportunistic selection (11) of a free frequency band also comprises the selection of at least one free backup frequency band.

5. Method according to any one of Claims 1 to 4, **characterized in that** it furthermore comprises steps of:

    - synchronization (13) on the pilot channel of an access equipment and of a terminal of the opportunistic radiocommunication system,
    - establishment (14) of a communication on the pilot channel between the access equipment and the terminal.

6. Method according to Claim 5, **characterized in that** it comprises, furthermore, a step of re-establishment (16b), by the access equipment, of the pilot channel on the selected free frequency band, after interruption of the pilot channel (16a) by the access equipment.

7. Method according to Claim 5, **characterized in that** it comprises, furthermore, a step of re-establishment (16b), by the access equipment, of the pilot channel on the at least one free backup frequency band, after interruption of the pilot channel (16a) by the access equipment.

8. Method of using a pilot channel in an opportunistic radiocommunication system whose frequency spectrum comprises a set of frequency bands and for which system the successive frames of a radiocommunication channel are divided into time intervals, **characterized in that**, said pilot channel having been created according to the method of Claim 1, said method of using comprises the following steps:

    - detection (13) of the pilot channel by a terminal with the aid of the beacon signal;
    - synchronization of the terminal with the access equipment; and
    - establishment of a communication with the access equipment.

**9.** Method according to Claim 8, **characterized in that** the communication between the terminal and the access equipment is performed on several successive frames of the pilot channel, in the course of at least one time interval of like rank for each of the successive frames, which time interval is chosen previously by the terminal.

**10.** Method according to Claim 8, **characterized in that** it furthermore comprises a step (15a) of detection of conflict between several terminals, by the access equipment, for the choice of the at least one time interval intended for the communication.

**11.** Method according to Claims 9 and 10, **characterized in that** it comprises, furthermore, a step (15b) of resolution of conflict between several terminals, by the terminals themselves, for the choice of the at least one time interval intended for the communication.

**12.** Access equipment (60) able to operate in an opportunistic radiocommunication system whose frequency spectrum comprises a set of frequency bands and for which system the successive frames of a radiocommunication channel are divided into time intervals, **characterized in that** it comprises:

- means (61) for opportunistic selection of a free frequency band in the frequency spectrum, to support a pilot channel,
- means (62) for sending, on the selected free frequency band, a beacon signal on at least one time interval of the successive frames of the pilot channel and for probing said free frequency band on at least one time interval distinct from the previous one.

**13.** Terminal (70) able to operate in an opportunistic radiocommunication system whose frequency spectrum comprises a set of frequency bands and for which system the successive frames of a radiocommunication channel are divided into time intervals, **characterized in that** it comprises:

- means (71) for detecting a pilot channel by detecting a beacon signal sent by an access equipment of the opportunistic radiocommunication system,
- means (72) for synchronization on the pilot channel with the access equipment,
- means (74) for establishing a communication on the pilot channel with the access equipment, on several successive frames of the pilot channel, in the course of at least one time interval of like rank for each of the successive frames, which at least one time interval is chosen previously by the terminal.

**14.** Computer program product implemented in an access equipment, able to operate in an opportunistic radiocommunication system whose frequency spectrum comprises a set of frequency bands and for which system the successive frames of a radiocommunication channel are divided into time intervals, **characterized in that** it comprises instructions necessary for carrying out the steps of the method according to Claims 1 to 7 when these steps are carried out by the access equipment.

**15.** Computer program product implemented in a terminal, able to operate in an opportunistic radiocommunication system whose frequency spectrum comprises a set of frequency bands and for which system the successive frames of a radiocommunication channel are divided into time intervals, **characterized in that** it comprises instructions necessary for carrying out the steps of the method according to Claims 8 to 11 when these steps are carried out by the terminal.

**Patentansprüche**

**1.** Verfahren zur Erzeugung eines Pilotkanals in einem opportunistischen Funkkommunikationssystem, dessen Frequenzspektrum eine Einheit von Frequenzbändern aufweist, und für welches System die aufeinanderfolgenden Rahmen eines Funkkommunikationskanals in Zeitintervalle aufgeteilt sind, **dadurch gekennzeichnet, dass** es die folgenden Schritte aufweist, die von einer Zugangsausrüstung durchgeführt werden:

- opportunistische Auswahl (11) eines freien Frequenzbands im Frequenzspektrum, um den Pilotkanal zu unterstützen,
- Senden (12), im ausgewählten freien Frequenzband, eines Richtfunksignals in mindestens einem Zeitintervall der aufeinanderfolgenden Rahmen des Pilotkanals, und Sondieren (12) des freien Frequenzbands in mindestens einem Zeitintervall, das sich vom vorhergehenden unterscheidet.

**2.** Verfahren nach Anspruch 1, **dadurch gekennzeichnet, dass** die opportunistische Auswahl (11) eines freien Frequenzbands im Frequenzspektrum ausgehend von einer Zustandstabelle des Frequenzspektrums erfolgt.

**3.** Verfahren nach Anspruch 2, **dadurch gekennzeichnet, dass** die Zustandstabelle des Frequenzspektrums durch Sondieren (12) der Gesamtheit der Frequenzbänder des Frequenzspektrums erhalten wird und mindestens für jedes Frequenzband eine Information über den Belegtzustand des Frequenzbands aufweist.

**4.** Verfahren nach einem der Ansprüche 1 bis 3, **dadurch gekennzeichnet, dass** der Schritt der opportunistischen Auswahl (11) eines freien Frequenzbands ebenfalls die Auswahl mindestens eines freien Ersatzfrequenzbands aufweist.

**5.** Verfahren nach einem der Ansprüche 1 bis 4, **dadurch gekennzeichnet, dass** es außerdem die folgenden Schritte aufweist:

- Synchronisation (13), im Pilotkanal, einer Zugangsausrüstung und eines Endgeräts des opportunistischen Funkkommunikationssystems,
- Aufbau (14) einer Kommunikation im Pilotkanal zwischen der Zugangsausrüstung und dem Endgerät.

**6.** Verfahren nach Anspruch 5, **dadurch gekennzeichnet, dass** es außerdem einen Schritt des Wiederaufbaus (16b), durch die Zugangsausrüstung, des Pilotkanals im ausgewählten freien Frequenzband nach Unterbrechung des Pilotkanals (16a) durch die Zugangsausrüstung aufweist.

**7.** Verfahren nach Anspruch 5, **dadurch gekennzeichnet, dass** es außerdem einen Schritt des Wiederaufbaus (16b), durch die Zugangsausrüstung, des Pilotkanals im mindestens einen freien Ersatzfrequenzband nach der Unterbrechung des Pilotkanals (16a) durch die Zugangsausrüstung aufweist.

**8.** Verfahren zur Nutzung eines Pilotkanals in einem opportunistischen Funkkommunikationssystem, dessen Frequenzspektrum eine Einheit von Frequenzbändern aufweist, und für welches System die aufeinanderfolgenden Rahmen eines Funkkommunikationkanals in Zeitintervalle aufgeteilt sind, **dadurch gekennzeichnet, dass**, wenn der Pilotkanal gemäß dem Verfahren des Anspruchs 1 erzeugt wurde, das Nutzungsverfahren die folgenden Schritte aufweist:

- Erfassung (13) des Pilotkanals durch ein Endgerät mit Hilfe des Richtfunksignals;
- Synchronisation des Endgeräts mit der Zugangsausrüstung; und
- Aufbau einer Kommunikation mit der Zugangsausrüstung.

**9.** Verfahren nach Anspruch 8, **dadurch gekennzeichnet, dass** die Kommunikation zwischen dem Endgerät und der Zugangsausrüstung über mehrere aufeinanderfolgende Rahmen des Pilotkanals während mindestens eines Zeitintervalls des gleichen Rangs für jeden der aufeinanderfolgenden Rahmen erfolgt, wobei das Zeitintervall vorher vom Endgerät gewählt wird.

**10.** Verfahren nach Anspruch 8, **dadurch gekennzeichnet, dass** es außerdem einen Schritt der Erfassung (15a) eines Konflikts zwischen mehreren Endgeräten, durch die Zugangsausrüstung, für die Wahl des mindestens einen für die Kommunikation bestimmten Zeitintervalls aufweist.

**11.** Verfahren nach den Ansprüchen 9 und 10, **dadurch gekennzeichnet, dass** es außerdem einen Schritt der Auflösung (15b) eines Konflikts zwischen mehreren Endgeräten, durch die Endgeräte selbst, für die Wahl des mindestens einen für die Kommunikation bestimmten Zeitintervalls aufweist.

**12.** Zugangsausrüstung (60), die in einem opportunistischen Funkkommunikationssystem arbeiten kann, dessen Frequenzspektrum eine Einheit von Frequenzbändern aufweist, und für welches System die aufeinanderfolgenden Rahmen eines Funkkommunikationskanals in Zeitintervalle aufgeteilt sind, **dadurch gekennzeichnet, dass** sie aufweist:

- Einrichtungen (61) zur opportunistischen Auswahl eines freien Frequenzbands im Frequenzspektrum, um einen Pilotkanal zu unterstützen,
- Einrichtungen (62) zum Senden, im ausgewählten freien Frequenzband, eines Richtfunksignals in mindestens einem Zeitintervall der aufeinanderfolgenden Rahmen des Pilotkanals, und zum Sondieren des freien Frequenzbands in mindestens einem Zeitintervall, das sich vom vorhergehenden unterscheidet.

**13.** Endgerät (70), das in einem opportunistischen Funkkommunikationssystem arbeiten kann, dessen Frequenzspektrum eine Einheit von Frequenzbändern aufweist, und für welches System die aufeinanderfolgenden Rahmen eines Funkkommunikationskanals in Zeitintervalle aufgeteilt sind, **dadurch gekennzeichnet, dass** es aufweist:

- Einrichtungen (71) zur Erfassung eines Pilotkanals durch Erfassung eines Richtfunksignals, das von einer Zugangsausrüstung des opportunistischen Funkkommunikationssystems gesendet wird,
- Einrichtungen (72) zur Synchronisation im Pilotkanal mit der Zugangsausrüstung,
- Einrichtungen (74) zum Aufbau einer Kommunikation im Pilotkanal mit der Zugangsausrüstung, über mehrere aufeinanderfolgende Rahmen des Pilotkanals, während mindestens eines Zeitintervalls des gleichen Rangs für jeden der aufeinanderfolgenden Rahmen, wobei das mindestens eine Zeitintervall vorher vom Endgerät gewählt wird.

**14.** Computerprogrammprodukt, das in einer Zugangsausrüstung eingesetzt wird, das in einem opportunistischen Funkkommunikationssystem arbeiten kann, dessen Frequenzspektrum eine Einheit von Frequenzbändern aufweist, und für welches System aufeinanderfolgende Rahmen eines Funkkommunikationkanals in Zeitintervalle aufgeteilt sind, **dadurch gekennzeichnet, dass** es Anweisungen aufweist, die für die Durchführung der Schritte des Verfahrens nach den Ansprüchen 1 bis 7 notwendig sind, wenn diese Schritte von der Zugangsausrüstung ausgeführt werden.

**15.** Computerprogrammprodukt, das in einem Endgerät eingesetzt wird, das in einem opportunistischen Funkkommunikationssystem arbeiten kann, dessen Frequenzspektrum eine Einheit von Frequenzbändern aufweist, und für welches System die aufeinanderfolgenden Rahmen eines Funkkommunikationkanals in Zeitintervalle aufgeteilt sind, **dadurch gekennzeichnet, dass** es Anweisungen aufweist, die für die Durchführung der Schritte des Verfahrens nach den Ansprüchen 8 bis 11 notwendig sind, wenn diese Schritte vom Endgerät durchgeführt werden.

11 — Sélection

12 — Emission et sondage

13 — Détection et synchronisation

14 — Communication

non ← Conflit ? 15a

oui

Résolution 15b

16a Rupture ? → non

oui

16b Rétablissement

**Fig. 1**

Spectre W

Sous-bande

| $W_1$ | $W_2$ | ...... | $W_{N-1}$ | $W_N$ |
|-------|-------|--------|-----------|-------|

**Fig. 2A**

Trame d'un canal de
radiocommunication
opportuniste

Intervalle
de temps

$W_i$

| $Int_0$ | $Int_1$ | ...... | $Int_{M-2}$ | $Int_{M-1}$ |
|---------|---------|--------|-------------|-------------|

**Fig. 2B**

Trame du canal pilote

Fig. 3A

Trame du canal pilote

Fig. 3B

Trame $t_i$ du canal pilote

Intervalle
de temps

| Int$_0$ | Int$_1$ | Int$_2$ | ...... | Int$_{M-2}$ | Int$_{M-1}$ |

B    S    S$_1$    S'$_2$    S

$T_1$ émet S$_1$
E reçoit

E émet S'$_2$
$T_2$ reçoit

**Fig. 4A**

Trame $t_{i+1}$ du canal pilote

Intervalle
de temps

| Int$_0$ | Int$_1$ | Int$_2$ | ...... | Int$_{M-2}$ | Int$_{M-1}$ |

B    S    S'$_1$    S$_2$    S

E émet S'$_1$
$T_1$ reçoit

$T_2$ émet S$_2$
E reçoit

**Fig. 4B**

**Fig. 5**

EP 2 213 010 B1

**Fig. 6**

**Fig. 7**

20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **PEREZ-ROMERO et al.** A novel on-demand cognitive pilot channel enabling dynamic spectrum allocation. *2007 2nd IEEE International Symposium on New Frontiers in Dynamic Spectrum Access Networks,* Avril 2007

- **RASHAD et al.** Efficient Pilot Pattern for OFDM-based Cognitive Radio Channel Estimation - Part 1. *14th IEEE Annual Symposium On Communications & Vehicular Technology,* Novembre 2007